# EUROPEAN PATENT APPLICATION

(11) **EP 4 274 158 A1**
(43) Date of publication of application: **08.11.2023**
(21) Application number: 21921727.0
(22) Date of filing: 26.01.2021
(51) Int. Cl.: H04L 9/40, H04L 67/01

(54) **COMMUNICATION METHOD AND APPARATUS**

(71) Applicant: Huawei Technologies Co., Ltd., Shenzhen, Guangdong 518129 (CN)
(72) Inventor: LIU, Huazhang, Shenzhen, Guangdong 518129 (CN); LI, Xuefeng, Shenzhen, Guangdong 518129 (CN)
(74) Representative: Pfenning, Meinig & Partner mbB
(86) International application number: PCT/CN2021/073855
(87) International publication number: WO 2022/160107

(57) **Abstract**

This application provides a communication method and apparatus, to resolve a problem that an amount of data transmitted by a sharing device per unit of time is limited and a sharing distance is short, thereby improving data quality and increasing a quantity of shared devices. The communication method and apparatus may be applied to a communication system. The method includes providing a communication method. The method is applied to a forwarding device. The communication method includes: The forwarding device receives sharing indication information from a terminal device. The sharing indication information indicates to share first data, and the first data is to-be-shared data of the terminal device. The forwarding device obtains the first data, and sends the first data to a plurality of receiving devices based on the sharing indication information.

## Description

### TECHNICAL FIELD

This application relates to the communication field, and in particular, to a communication method and apparatus.

### BACKGROUND

Data sharing is a process in which a device sends data, such as audio, to another device, for example, a device of a colleague, a friend, or another group of people. A common manner of data sharing is Bluetooth sharing.

Currently, Bluetooth sharing of data can be implemented based on a point-to-point multi-connection solution and a broadcast solution. Specifically, in the point-to-point multi-connection solution, through point-to-point connections separately established with a plurality of shared devices, a sharing device sends one copy (copy) of to-be-shared data to each of the shared devices. In the broadcast solution, a sharing device sends one piece of to-be-shared data to all shared devices through broadcast.

In the foregoing two solutions, a plurality of copies of to-be-shared data or a plurality of pieces of to-be-shared data need to be sent. This occupies a large quantity of air interface resources. Because Bluetooth uses a frequency hopping spread spectrum (frequency hopping spread spectrum, FHSS) manner for communication, a frequency band needs to be divided into a plurality of sub-bands, and a device works on one sub-band at each moment. As a result, the device occupies only a part of bandwidth at each moment, a small amount of data is transmitted per unit of time, and high-quality Bluetooth sharing cannot be supported. In addition, because both Bluetooth and wireless fidelity (wireless fidelity, Wi-Fi) work on a 2.4 giga hertz (giga hertz, GHz) frequency band, and Bluetooth and Wi-Fi of a sharing device may need to share a same antenna, a case in which Bluetooth sharing and Wi-Fi communication preempt an air interface resource may be caused. For example, Bluetooth sharing can only be completed in a part of time. As a result, a data transmission rate is limited, and high-quality Bluetooth sharing also cannot be supported. In addition, limited by battery capacity, transmit power of the sharing device is usually small, and long-distance data sharing cannot be supported.

### SUMMARY

Embodiments of this application provide a communication method and apparatus, to resolve a problem that an amount of data transmitted by a sharing device per unit of time is limited and a sharing distance is short, thereby improving data quality and increasing a quantity of shared devices.

To achieve the foregoing objective, the following technical solutions are used in this application.

According to a first aspect, a communication method is provided. The method is applied to a forwarding device. The communication method includes: The forwarding device receives sharing indication information from a terminal device, where the sharing indication information indicates to share first data, and the first data is to-be-shared data of the terminal device. The forwarding device obtains the first data, and sends the first data to a plurality of receiving terminals in a radio broadcast manner based on the sharing indication information.

Based on the communication method according to the first aspect, the forwarding device (namely, an auxiliary sharing device) may obtain the first data, and share the first data with the plurality of receiving terminals (namely, shared devices) based on the sharing indication information of the terminal device (namely, a primary sharing device). That is, the forwarding device may assist the terminal device in completing data sharing. The primary sharing device may be a device with a limited air interface resource and/or transmit power, and the auxiliary sharing device may be a device with an unlimited air interface resource and/or transmit power. In this way, the terminal device may send the first data to the forwarding device in a communication manner, for example, Wi-Fi or wired communication. Because the Wi-Fi communication occupies a wider frequency band at a same moment, the Wi-Fi communication has a higher rate than a short-range wireless communication technology, for example, Bluetooth. However, the wired manner can further get rid of a rate limitation of short-range wireless communication such as the Bluetooth and Wi-Fi communication. Therefore, a larger amount of data can be sent per unit of time by using each of the two manners. In addition, after obtaining high-quality to-be-shared data, the forwarding device may share the data to the plurality of receiving terminals such as Bluetooth speakers in the radio broadcast manner, so that the high-quality to-be-shared data can be sent, and sharing quality can be ensured. Alternatively, the terminal device needs to send only the to-be-shared data to the forwarding device, and may send different parts of the to-be-shared data by using an air interface resource for repeatedly sending the to-be-shared data, to implement sharing of higher-quality to-be-shared data. This not only ensures sharing quality, but also reduces an amount of data sent by the terminal device. Therefore, resource overheads and power consumption of the primary sharing device are reduced, to consider both a data sharing service and another service.

In addition, as a relay device for sharing data by the terminal device, the forwarding device can share the data with more devices, to expand a sharing range, thereby improving data sharing efficiency.

In addition, the terminal device may send the data to the forwarding device by using lower transmit power, to reduce power consumption and prolong standby time.

In a possible design scheme, the radio broadcast manner may be a broadcast manner based on the short-range wireless communication technology. In this way, impact of a network status on a data sharing process can be avoided, and sharing efficiency can be improved.

Optionally, the short-range wireless communication may include one or more of the following: Bluetooth communication or wireless fidelity communication. In this way, data may be sent in a Bluetooth or wireless fidelity broadcast manner, and both the sharing efficiency and a quantity of shared devices are considered.

In a possible design scheme, the first data may be audio data. In this way, the audio data can be shared, and audio sharing quality can be improved.

Optionally, that the forwarding device obtains the first data may include: The forwarding device receives the first data from a Bluetooth device. The Bluetooth device is connected to the terminal device through Bluetooth. In this way, the first data may alternatively be provided by the Bluetooth device, so that the power consumption of the terminal device can be further reduced, and an application scenario of data sharing can be expanded, thereby improving applicability and flexibility.

Alternatively, optionally, the forwarding device receives the first data from the terminal device. In this way, the terminal device may send higher-quality first data to the forwarding device, to further improve data sharing quality.

Further, before the forwarding device obtains the first data, the communication method according to the first aspect may further include receiving decryption information from the terminal device. The decryption information is for parsing the first data transmitted between the terminal device and the Bluetooth device. In this way, the forwarding device may parse, based on the decryption information provided by the terminal device, the first data transmitted between the terminal device and the Bluetooth device, and the terminal device does not need to send the first data to the forwarding device. This can further reduce resource overheads of the terminal device.

Further, before the forwarding device receives the first data from the terminal device, the communication method according to the first aspect may further include: The forwarding device sends first information to the terminal device. The first information indicates that the sharing indication information has been received. Alternatively, the first information is for requesting the first data. In this way, the terminal device sends the first data based on the first information, so that reliability of the first data received by the forwarding device can be improved, and an effect of data sharing can be further improved.

In a possible design scheme, the sharing indication information may include one or more of the following: a quantity of retransmissions of the first data or transmit power. In this way, a quantity of retransmissions of the forwarding device may be determined by using the terminal device. The first data is retransmitted for a plurality of times, to increase a probability that the receiving terminal receives the first data, so that reliability of data sharing is improved. In addition, transmit power of the forwarding device is determined by using the terminal device, so that a proper sharing range can be ensured.

In a possible design scheme, the forwarding device may include a first communication module and a second communication module. The first communication module is configured to receive the first data, and the second communication module is configured to send the first data. In this way, a receiving function and a sending function can be separated, thereby avoiding mutual influence between receiving and sending, and further improving data sharing quality.

According to a second aspect, a communication method is provided, and is applied to a terminal device. The communication method includes: The terminal device sends sharing indication information to a forwarding device, to indicate the forwarding device to share to-be-shared first data of the terminal device. The terminal device sends the first data to the forwarding device in a unicast manner.

In a possible design scheme, the communication method according to the second aspect may further include: The terminal device receives first information from the forwarding device. The first information indicates that the sharing indication information has been received. Alternatively, the first information is for requesting the first data.

Optionally, the sharing indication information may include one or more of the following: a quantity of retransmissions of the first data or transmit power.

In addition, for a technical effect of the communication method according to the second aspect, refer to a technical effect of the communication method according to the first aspect. Details are not described herein again.

According to a third aspect, a communication apparatus is provided. The communication apparatus includes a processor and a transceiver coupled to the processor. The processor is configured to: receive sharing indication information from a terminal device through the transceiver, where the sharing indication information indicates to share first data, and the first data is to-be-shared data of the terminal device; obtain the first data through the transceiver; and control the transceiver to send the first data to a plurality of receiving devices in a radio broadcast manner based on the sharing indication information.

In a possible design scheme, the transceiver supports short-range wireless communication, and the radio broadcast manner is a broadcast manner based on a short-range wireless communication technology.

Optionally, the short-range wireless communication includes one or more of the following: Bluetooth communication or wireless fidelity communication.

In a possible design scheme, the first data is audio data.

Optionally, the processor is configured to receive the first data from a Bluetooth device through the transceiver. The Bluetooth device may be connected to the terminal device through Bluetooth.

Alternatively, optionally, the processor is configured to receive the first data from the terminal device through the transceiver.

Further, the processor is further configured to receive decryption information from the terminal device. The decryption information is for parsing the first data transmitted between the terminal device and the Bluetooth device.

Further, the processor is further configured to send first information to the terminal device through the transceiver. The first information indicates that the sharing indication information has been received. Alternatively, the first information is for requesting the first data.

In a possible design scheme, the sharing indication information may include one or more of the following: a quantity of retransmissions of the first data or transmit power.

In a possible design scheme, the processor may include a first communication module and a second communication module. The first communication module is configured to receive the first data, and the second communication module is configured to send the first data.

In a possible design scheme, the communication apparatus according to the third aspect may be a home intelligent terminal or a Bluetooth carry-on companion.

In this embodiment of this application, the transceiver may be a transceiver circuit or an interface circuit. The transceiver may be used by the communication apparatus according to the third aspect to communicate with another communication apparatus.

It should be noted that, in this embodiment of this application, the transceiver may be a transceiver based on the short-range wireless communication.

Optionally, the communication apparatus according to the third aspect may further include a storage module, and the storage module stores a program or instructions. When the processor executes the program or the instructions, the communication apparatus is enabled to perform the communication method according to the first aspect.

The communication apparatus according to the third aspect may be a terminal, may be a chip (system) or another component or assembly that may be disposed in the terminal, or may be an apparatus including the terminal. This is not limited in this application.

In addition, for a technical effect of the communication apparatus according to the third aspect, refer to a technical effect of the communication method according to the first aspect. Details are not described herein again.

According to a fourth aspect, a communication apparatus is provided. The communication apparatus includes a processor and a first transceiver coupled to the processor. The processor is configured to: send sharing indication information to a forwarding device through the first transceiver, where the sharing indication information indicates to share first data, and the first data is to-be-shared data of a terminal device; and send the first data to the forwarding device in a unicast manner through the first transceiver.

In a possible design scheme, the processor is further configured to receive first information from the forwarding device through the first transceiver. The first information indicates that the sharing indication information has been received. Alternatively, the first information is for requesting the first data.

In a possible design scheme, the sharing indication information may include one or more of the following: a quantity of retransmissions of the first data or transmit power.

In a possible design scheme, the communication apparatus according to the fourth aspect may further include a second transceiver, where the second transceiver shares an antenna with the first transceiver in a time division multiplexing manner.

It should be noted that, in this embodiment of this application, a transceiver may be a transceiver circuit or an interface circuit. The transceiver may be used by the communication apparatus according to the fourth aspect to communicate with another communication apparatus.

Optionally, the communication apparatus according to the fourth aspect may further include a storage module, and the storage module stores a program or instructions. When the processor executes the program or the instructions, the communication apparatus is enabled to perform the communication method according to the second aspect.

The communication apparatus according to the fourth aspect may be a terminal, may be a chip (system) or another component or assembly that may be disposed in the terminal, or may be an apparatus including the terminal. This is not limited in this application.

In addition, for a technical effect of the communication apparatus according to the fourth aspect, refer to a technical effect of the communication method according to the first aspect. Details are not described herein again.

According to a fifth aspect, a communication apparatus is provided. The communication apparatus is configured to perform the communication method according to any implementation of the first aspect or the second aspect.

In this application, the communication apparatus according to the fifth aspect may be a device according to the first aspect or the second aspect, a chip (system) or another component or assembly that may be disposed in the device, or an apparatus including the device.

It should be understood that the communication apparatus according to the fifth aspect includes a corresponding module, unit, or means (means) for implementing the communication method according to any one of the first aspect and the second aspect. The module, unit, or means may be implemented by hardware, may be implemented by software, or may be implemented by hardware executing corresponding software. The hardware or the software includes one or more modules or units configured to perform functions related to the foregoing communication method.

In addition, for a technical effect of the communication apparatus according to the fifth aspect, refer to a technical effect of the communication method according to any one of the first aspect or the second aspect. Details are not described herein again.

According to a sixth aspect, a communication apparatus is provided. The communication apparatus includes a processor, and the processor is configured to perform the communication method according to any possible implementation of the first aspect or the second aspect.

In a possible design scheme, the communication apparatus according to the sixth aspect may further include a transceiver. The transceiver may be a transceiver circuit or an interface circuit. The transceiver may be used by the communication apparatus according to the sixth aspect to communicate with another communication apparatus.

In a possible design scheme, the communication apparatus according to the sixth aspect may further include a memory. The memory and the processor may be integrated together, or may be disposed separately. The memory may be configured to store a computer program and/or data related to the communication method according to any one of the first aspect or the second aspect.

In this application, the communication apparatus according to the sixth aspect may be a device according to the first aspect or the second aspect, a chip (system) or another component or assembly that may be disposed in the device, or an apparatus including the device.

In addition, for a technical effect of the communication apparatus according to the sixth aspect, refer to a technical effect of the communication method according to any implementation of the first aspect or the second aspect. Details are not described herein again.

According to a seventh aspect, a communication apparatus is provided. The communication apparatus includes a processor. The processor is coupled to a memory, and the processor is configured to execute a computer program stored in the memory, so that the communication apparatus performs the communication method according to any possible implementation of the first aspect or the second aspect.

In a possible design scheme, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be a device according to the first aspect or the second aspect, a chip (system) or another component or assembly that may be disposed in the device, or an apparatus including the device.

In addition, for a technical effect of the communication apparatus according to the seventh aspect, refer to a technical effect of the communication method according to any implementation of the first aspect and the second aspect. Details are not described herein again.

According to an eighth aspect, a communication apparatus is provided, and includes a processor and a memory. The memory is configured to store a computer program. When the processor executes the computer program, the communication apparatus is enabled to perform the communication method according to any implementation of the first aspect or the second aspect.

In a possible design scheme, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this application, the communication apparatus according to the eighth aspect may be a device according to the first aspect or the second aspect, a chip (system) or another component or assembly that may be disposed in the device, or an apparatus including the device.

In addition, for a technical effect of the communication apparatus according to the eighth aspect, refer to a technical effect of the communication method according to any implementation of the first aspect or the second aspect. Details are not described herein again.

According to a ninth aspect, a communication apparatus is provided, and includes a processor. The processor is configured to: after being coupled to a memory and reading a computer program in the memory, perform, based on the computer program, the communication method according to any implementation of the first aspect or the second aspect.

In a possible design scheme, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this application, the communication apparatus according to the ninth aspect may be a device according to the first aspect or the second aspect, a chip (system) or another component or assembly that may be disposed in the device, or an apparatus including the device.

In addition, for a technical effect of the communication apparatus according to the ninth aspect, refer to a technical effect of the communication method according to any implementation of the first aspect or the second aspect. Details are not described herein again.

According to a tenth aspect, a processor is provided. The processor is configured to perform the communication method according to any possible implementation of the first aspect or the second aspect.

According to an eleventh aspect, a communication system is provided. The communication system includes a forwarding device, a terminal device, and a plurality of receiving devices.

According to a twelfth aspect, a computer-readable storage medium is provided, and includes a computer program or instructions. When the computer program or the instructions are run on a computer, the computer is enabled to perform the communication method according to any possible implementation of the first aspect or the second aspect.

According to a thirteenth aspect, a computer program product is provided, and includes a computer program or instructions. When the computer program or the instructions are run on a computer, the computer is enabled to perform the communication method according to any possible implementation of the first aspect or the second aspect.

### BRIEF DESCRIPTION OF DRAWINGS

FIG. 1 is a schematic diagram of an architecture of a communication system according to an embodiment of this application;
FIG. 2 is a schematic diagram 1 of an architecture of a device according to an embodiment of this application;
FIG. 3 is a schematic diagram 2 of an architecture of a device according to an embodiment of this application;
FIG. 4 is a schematic diagram 3 of an architecture of a device according to an embodiment of this application;
FIG. 5 is a schematic diagram 4 of an architecture of a device according to an embodiment of this application;
FIG. 6 is a schematic flowchart 1 of a communication method according to an embodiment of this application;
FIG. 7 is a schematic diagram of sending data in a broadcast manner according to an embodiment of this application;
FIG. 8 is a schematic flowchart of establishing a Bluetooth connection according to an embodiment of this application;
FIG. 9 is a schematic flowchart of establishing a Wi-Fi connection according to an embodiment of this application;
FIG. 10 is a schematic diagram of a structure of a Bluetooth broadcast connection;
FIG. 11 is a schematic diagram of a structure of a Bluetooth point-to-point connection;
FIG. 12 is a schematic flowchart 2 of a communication method according to an embodiment of this application;
FIG. 13 is a schematic diagram 1 of a structure of a communication apparatus according to an embodiment of this application;
FIG. 14 is a schematic diagram 2 of a structure of a communication apparatus according to an embodiment of this application; and
FIG. 15 is a schematic diagram 3 of a structure of a communication apparatus according to an embodiment of this application.

### DESCRIPTION OF EMBODIMENTS

The following first describes technical terms in embodiments of this application.
1. A Bluetooth (Bluetooth) technology is a technology that implements wireless communication through an ultra high frequency (ultra high frequency, UHF) radio wave in a band of 2.4 GHz to 2.485 GHz, and can implement short-range communication between devices, for example, communication between a mobile phone and another device such as a smart television or a notebook computer, or communication between a mobile phone and one or more of the following external devices: a wireless headset or a wireless speaker.
2. Unicast (unicast) is a transmission manner in which a destination address is a single target. Information is received and transmitted only between two devices.
3. Broadcast (broadcast) is a transmission manner in which a destination address is all devices on a network. A sending device sends data to all the devices on the network.
4. An air interface resource is a radio resource for data transmission between devices, for example, a frequency domain resource, a time domain resource, a space domain resource, or a code domain resource.

The following describes technical solutions of this application with reference to accompanying drawings.

The technical solutions in embodiments of this application may be applied to various inter-device communication systems, for example, a Bluetooth communication system, a wireless fidelity (wireless fidelity, Wi-Fi) system, a vehicle to everything (vehicle to everything, a V2X) communication system, a device-to-device (device-to-device, D2D) communication system, and an internet of vehicles communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, words such as "example" and "for example" are for representing giving an example, an illustration, or a description. Any embodiment or design scheme described as an "example" in this application should not be explained as being more preferred or having more advantages than another embodiment or design scheme. Exactly, use of the word "example" is intended to present a concept in a specific manner.

In embodiments of this application, terms such as "information (information)", "signal (signal)", "message (message)", "channel (channel)", and "signaling (signaling)" may sometimes be interchangeably used. It should be noted that expressed meanings are consistent when differences are not emphasized. Terms such as "of (of)" and "corresponding (corresponding, relevant)" may sometimes be interchangeably used. It should be noted that expressed meanings are consistent when differences are not emphasized.

In embodiments of this application, sometimes a subscript such as Wi may be incorrectly used as a non-subscript form such as W1. Expressed meanings are consistent when differences are not emphasized.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to similar technical problems.

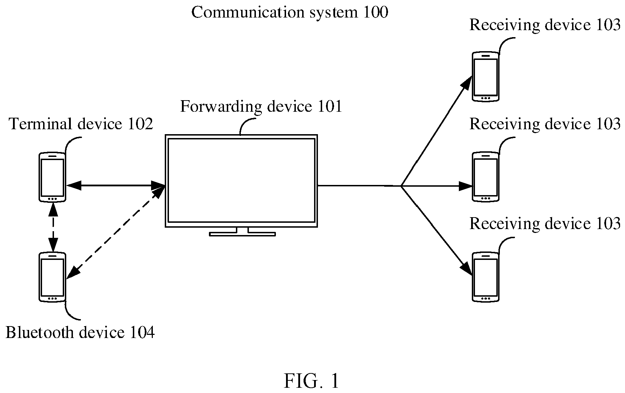

For ease of understanding embodiments of this application, a communication system shown in FIG. 1 is first used as an example to describe in detail a communication system applicable to embodiments of this application.

For example, FIG. 1 is a schematic diagram 1 of an architecture of a communication system to which a communication method according to an embodiment of this application is applicable. As shown in FIG. 1, the communication system 100 includes a forwarding device 101, a terminal device 102, and a plurality of receiving devices 103. The forwarding device 101 is connected to the terminal device 102, and the forwarding device 101 is further connected to each receiving device 103.

The forwarding device 101 may be configured to receive data and send data. For example, the forwarding device 101 may receive data from the terminal device 102, the receiving device 103, or another device; and the forwarding device 101 may send data to the terminal device 102, the receiving device 103, or the another device.

First data is to-be-shared data of the terminal device 102, namely, the to-be-shared data determined by the terminal device 102, for example, audio data, image data, and video data.

The terminal device 102 may be configured to send data, or may be configured to control a data sharing process of the forwarding device 101. For example, the terminal device 102 may send data to the forwarding device 101 or another device.

Optionally, the terminal device 102 may be further configured to provide a data source for the forwarding device 101.

Optionally, the terminal device 102 may be further configured to receive data. For example, the terminal device 102 may receive data from the forwarding device 101 or the another device.

The receiving device 103 may be configured to receive data and process the data. For example, the receiving device 103 may receive data from the forwarding device 101, such as audio data, and play the data.

For example, the communication system shown in FIG. 1 may further include a Bluetooth device 104. The Bluetooth device 104 is connected to the terminal device 102.

Optionally, the Bluetooth device 104 may be connected to the forwarding device 101.

The Bluetooth device 104 is configured to receive data, and/or send data. For example, the Bluetooth device 104 may receive data from the terminal device 102 or another device, for example, the forwarding device 101; and the Bluetooth device may send data to the terminal device 101 or the another device, for example, the forwarding device 101.

Optionally, the Bluetooth device 104 may be configured to provide a data source for the forwarding device 101.

The forwarding device 101, the terminal device 102, the receiving device 103, and the Bluetooth device 104 may be devices of a same type, or may be devices of different types. This is not specifically limited in this embodiment of this application.

Optionally, any one of the forwarding device 101, the terminal device 102, the Bluetooth device 104, and the plurality of receiving devices 103 may be further configured to process data.

For example, the forwarding device 101 and the terminal device 103 may be connected in a point-to-point manner, or may be connected in another manner. Specifically, a communication connection between the forwarding device 101 and the terminal device 103 may be implemented in a wired manner, or may be implemented in a wireless manner, for example, Wi-Fi or Bluetooth. The forwarding device 101 and the receiving device 103 may be connected in a broadcast manner. For example, the forwarding device 101 may send data to the receiving device 103 by using a Bluetooth broadcast isochronous stream (broadcast isochronous stream, BIS), for example, a Bluetooth low energy (low energy/Bluetooth low, LE/BLE) BIS. The forwarding device 101 may further send the data to the receiving device 103 in a connectionless slave broadcast (connectionless slave broadcast, CSB) manner.

In a possible design scheme, the communication system shown in FIG. 1 may be configured to implement the communication method provided in embodiments of this application, for example, S601 to S603 and S 1501 to S1504. For specific implementation, refer to the following method embodiments. Details are not described herein.

It should be noted that the communication system 100 shown in FIG. 1 may further include another device that is not shown.

The forwarding device 101, the terminal device 102, and the receiving device 103 shown in FIG. 1 may be various types of devices, for example, various devices in the Internet of Things. The device may also be referred to as user equipment, an access terminal, a subscriber unit, a subscriber station, a mobile station, a remote station, a remote terminal, a mobile device, a user terminal, a terminal, a wireless communication device, a user agent, or a user apparatus.

For example, the terminal device in this embodiment of this application may be a mobile phone (mobile phone), a pad (Pad), or a computer with a wireless transceiver function. It may be understood that, in this embodiment of this application, the terminal device may further be a Bluetooth headset, a Bluetooth speaker, a smart screen, a Bluetooth sharing companion, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU with a terminal function, and the like. The terminal device in this application may alternatively be a vehicle-mounted module, a vehicle-mounted component, a vehicle-mounted chip, or a vehicle-mounted unit that is built in a vehicle as one or more components or units. The vehicle may implement the communication method provided in this application by using the built-in vehicle-mounted module, the vehicle-mounted component, the vehicle-mounted chip, or the vehicle-mounted unit.

For example, in this embodiment of this application, the forwarding device may be a home intelligent terminal such as a smart screen, a Bluetooth sharing companion (also referred to as a Bluetooth carry-on companion), or the like.

For example, in this embodiment of this application, the receiving device may be a Bluetooth headset, a Bluetooth speaker, a mobile phone, a pad, or the like.

For example, in this embodiment of this application, the Bluetooth device may be a Bluetooth headset, or the Bluetooth device may be a mobile phone, a pad, or the like.

For example, the smart screen may be a device with a Bluetooth function and a Wi-Fi function, and the Bluetooth sharing companion may be a device with a Bluetooth function. Alternatively, the device in the communication system shown in FIG. 1 may be another device with a data processing function and a data sending and receiving function. A type of the device is not specifically limited in this embodiment of this application.

For example, in FIG. 1, the forwarding device 101 may be a smart screen a, the terminal device 102 may be a mobile phone a, and the plurality of receiving devices 103 separately include a mobile phone b, a Bluetooth headset a, and a Bluetooth speaker a. A communication connection between the mobile phone a and the smart screen a may be implemented by using Wi-Fi. A broadcast connection between the smart screen a and the mobile phone b, the Bluetooth headset a, and the Bluetooth speaker a may be implemented by using the LE BIS.

Optionally, the Bluetooth device 104 may be a Bluetooth headset b, where the Bluetooth headset b is connected to the smart screen a. For example, the Bluetooth headset b may be connected to the smart screen a by using a Bluetooth advanced audio distribution profile (advanced audio distribution profile, A2DP).

For another example, the forwarding device 101 in FIG. 1 may alternatively be a Bluetooth sharing companion a, the terminal device 102 may be a mobile phone c, and the plurality of receiving devices 103 separately include a mobile phone d, a Bluetooth headset c, and a Bluetooth speaker b. A communication connection between the mobile phone c and the Bluetooth sharing companion a may be implemented by using the Wi-Fi. A broadcast connection between the Bluetooth sharing companion a and the mobile phone d, the Bluetooth headset c, and the Bluetooth speaker b may be implemented by using the LE BIS.

Optionally, the Bluetooth device 104 may be a Bluetooth headset d, where the Bluetooth headset d is connected to the smart screen a. For example, the Bluetooth headset d may be connected to the smart screen a by using the Bluetooth A2DP.

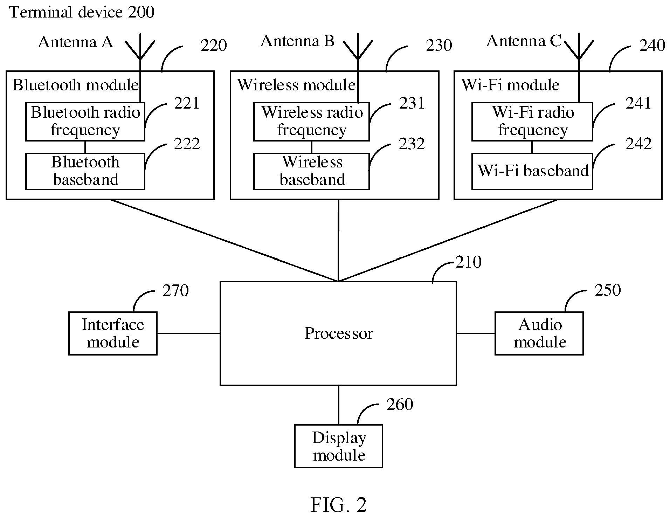

FIG. 2 is a schematic diagram 1 of a structure of a device according to an embodiment of this application. As shown in FIG. 2, a terminal device is used as an example, and the terminal device 200 may include a processor 210, a Bluetooth module 220, a wireless module 230, a Wi-Fi module 240, an audio module 250, a display module 260, and an interface module 270.

The processor 210 may include one or more processing units. For example, the processor 210 may include an application processor (application processor, AP), a modem, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. It should be noted that different processing units may be independent devices, may be integrated into one or more independent processors, or may be integrated into a same device with another module in the terminal device. The modem is used as an example. The modem may be a processing unit independent of the processor 210, or may be integrated into a same device with another processing unit (for example, the AP, the ISP, or the GPU), or some or all functions of the modem and the wireless module 230 may be integrated into a same device. The controller is alternatively used as an example. The controller may be a processing unit independent of the processor 210, or may be integrated into a same device with another processing unit (for example, the video codec or the digital signal processor), or some or all functions of the controller and the wireless module 230 may be integrated into a same device.

The Bluetooth module may be configured to transmit data, for example, audio, and may provide a wireless communication solution that is applied to the terminal device and that includes Bluetooth (Bluetooth, BT). The Bluetooth module 220 may include a Bluetooth radio frequency 221 and a Bluetooth baseband 222.

The wireless module 230 may include a wireless radio frequency 231 and a wireless baseband 232. The wireless module 230 may further provide a wireless communication solution applied to the terminal device, for example, a global navigation satellite system (global navigation satellite system, GNSS), frequency modulation (frequency modulation, FM), a near field communication (near field communication, NFC) technology, or an infrared (infrared, IR) technology. The wireless module 230 may include a mobile communication module. The mobile communication module may be configured to implement communication between the terminal device and a network device based on a mobile communication technology (for example, 2G, 3G, 4G, or 5G) supported by the terminal device. For example, the mobile communication technology supported by the terminal device may include at least one of a global system for mobile communication (global system for mobile communication, GSM), a general packet radio service (general packet radio service, GPRS) technology, code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), new radio (new radio, NR), or the like.

For example, the terminal device supports the GSM. After the terminal device accesses a network by using a cell provided by a base transceiver station (base transceiver station, BTS) in the GSM communication system, when network signal strength of the accessed cell is not lower than a determining threshold, that is, when the terminal device is in a network camping state, communication between the terminal device and the BTS is implemented by using the mobile communication module. For example, the mobile communication module may amplify a signal modulated by the modem, and then send the signal to the network device through an antenna A. Alternatively, the mobile communication module may receive, through the antenna A, a signal sent by the network device, amplify the signal, and then send the signal to the modem. The modem demodulates the received signal into a low-frequency baseband signal, and then performs other corresponding processing. In some embodiments, the mobile communication module may include a filter, a switch, a power amplifier, a low noise amplifier (low noise amplifier, LNA), and the like.

The Wi-Fi module 240 may include a Wi-Fi radio frequency 241 and a Wi-Fi baseband 242. The Wi-Fi module 240 may provide a wireless communication solution that is applied to the terminal device and that includes a radio access network (wireless local area network, WLAN) (for example, a wireless fidelity (wireless fidelity, Wi-Fi) network) and the like.

It should be noted that, in this embodiment of this application, one or more of the following: the Bluetooth module 220, the wireless module 230, and the Wi-Fi module 240 may be integrated into a transceiver. Alternatively, the transceiver may be a transceiver based on short-range wireless communication.

The terminal device may process audio data by using the audio module. For example, the terminal device may include a speaker, a receiver, a microphone, a headset jack, an AP, and the like that are connected to the audio module. The terminal device may implement an audio function, for example, music playing and recording, by using the audio module, the speaker, the receiver, the microphone, the headset jack, the AP, and the like.

The display module may be configured to display an image, a video, and the like. The display module may include one or more displays.

The terminal module may also be connected to an external device through the interface module. The interface module may include one or more of the following: a universal serial bus (universal serial bus, USB) interface, a subscriber identity module (subscriber identity module, SIM) card interface, an external memory interface, and the like.

It should be noted that the terminal device shown in FIG. 2 may further include one or more of the following: an internal memory, a battery, a charging management module, a power management module, a camera, a button, or a sensor module.

The internal memory may be configured to store data and/or at least one computer program, and the at least one computer program includes instructions. Specifically, the internal memory may include a program storage area and a data storage area. The program storage area may store at least one computer program. The computer program may include an application (for example, a gallery or a contact), an operating system (for example, an Android operating system or an IOS operating system), another program, or the like. For example, the computer program may include a program for performing static detection. The data storage area may store at least one piece of data created during use of the terminal device, data received from another device (for example, another terminal device, a network device, a server, or an external memory), data prestored before delivery, or the like. For example, the data stored in the internal memory may be at least one piece of information such as an application, source code of the application, an image, a file, or an identifier.

In some embodiments, the internal memory may include a high-speed random access memory and/or a nonvolatile memory. For example, the internal memory includes one or more magnetic disk storage devices, a flash (flash) memory device, a universal flash storage (universal flash storage, UFS), or the like.

In this embodiment of this application, the battery may be configured to supply power to the terminal device. The battery may be a rechargeable battery or another non-rechargeable battery.

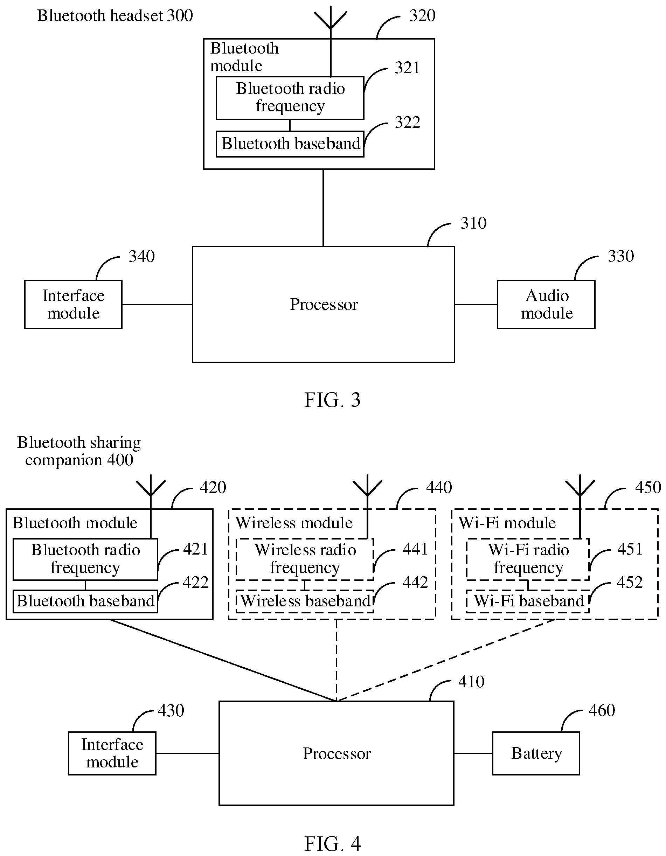

It should be noted that the terminal device in this embodiment of this application may include an entire structure in FIG. 2, may include a part of the structure in FIG. 2, or may include a structure other than that in FIG. 2. The following provides descriptions with reference to FIG. 3 to FIG. 5.

FIG. 3 is a schematic diagram 2 of a structure of a device according to an embodiment of this application. As shown in FIG. 3, an example in which the device is a Bluetooth headset is used, and the Bluetooth headset 300 may include a processor 310, a Bluetooth module 320, an audio module 330, and an interface module 340. The Bluetooth module 320 may include a Bluetooth radio frequency 321 and a Bluetooth baseband 322.

For functions of the processor 310, the Bluetooth module 320, the audio module 330, and the interface module 340 in FIG. 3, refer to functions of the processor 210, the Bluetooth module 220, the audio module 250, and the interface module 270 in FIG. 2. Details are not described herein again.

FIG. 4 is a schematic diagram 3 of a structure of a device according to an embodiment of this application. As shown in FIG. 4, an example in which the device is a Bluetooth sharing companion is used, and the Bluetooth sharing companion 400 includes a processor 410, a Bluetooth module 420, an interface module 430, and a battery 460. The Bluetooth module 420 may include a Bluetooth radio frequency 421 and a Bluetooth baseband 422. The battery may be a large-capacity battery.

The Bluetooth sharing companion 400 may further include a wireless module 440 and a Wi-Fi module 450. The wireless module 440 includes a wireless radio frequency 441 and a wireless baseband 442. The Wi-Fi module may include a Wi-Fi radio frequency 451 and a Wi-Fi baseband 452.

For functions of the processor 410, the Bluetooth module 420, the interface module 430, the wireless module 440, the Wi-Fi module, and the battery 460 in FIG. 4, refer to functions of the processor 210, the Bluetooth module 220, the interface module 270, the wireless module 230, the Wi-Fi module 240, and the battery in FIG. 2. Details are not described herein again.

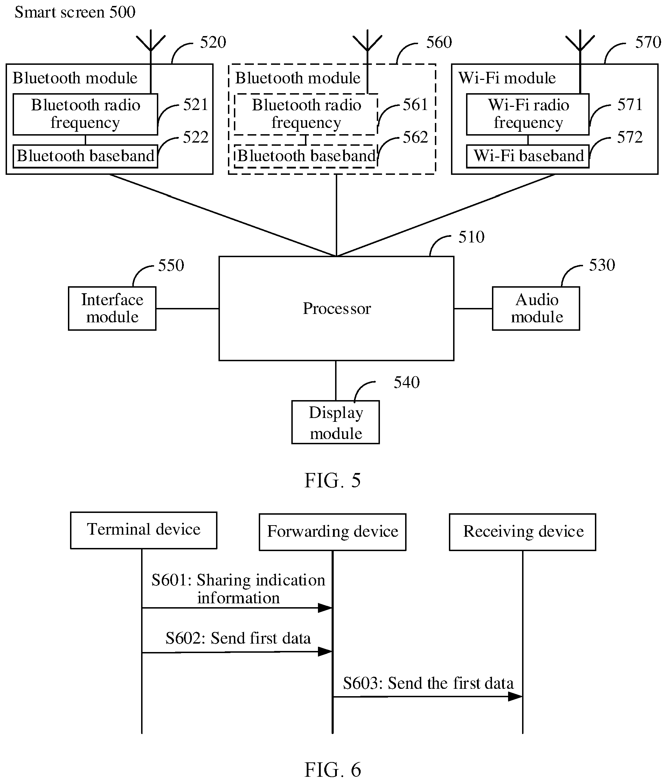

FIG. 5 is a schematic diagram 4 of a structure of a device according to an embodiment of this application. As shown in FIG. 5, a smart screen is used as an example, and the smart screen 500 includes a processor 510, a Bluetooth module 520, an audio module 530, a display module 540, and an interface module 550. The Bluetooth module 520 may include a Bluetooth radio frequency 521 and a Bluetooth baseband 522.

The smart screen 500 may further include a Bluetooth module 560 and a Wi-Fi module 570. The Bluetooth module 560 may include a Bluetooth radio frequency 561 and a Bluetooth baseband 562. The Wi-Fi module 570 may include a Wi-Fi radio frequency 571 and a Wi-Fi baseband 572.

For functions of the processor 510, the Bluetooth module 520, the audio module 530, the display module 540, the interface module 550, and the Wi-Fi module 570 in FIG. 5, refer to functions of the processor 210, the Bluetooth module 220, the audio module 250, the display module 260, the interface module 270, and the Wi-Fi module 240 in FIG. 2. For a function of the Bluetooth module 520 in FIG. 5, refer to a function of the Bluetooth module 220 in FIG. 2. Details are not described herein again.

The structures of the devices shown in FIG. 2 to FIG. 5 do not constitute limitations on the devices, and may include more or fewer components than those shown in the figure, or combine some components, or have different component arrangements.

It should be noted that the foregoing device is a terminal that accesses the foregoing communication system and has a data sending and receiving function, or a chip or a chip system that may be disposed in the terminal.

It should be noted that the solutions in embodiments of this application may be further applied to another communication system, and a corresponding name may alternatively be replaced with a name of a corresponding function in the another communication system.

It should be understood that FIG. 1 is merely a simplified schematic diagram of an example for ease of understanding. The communication system may further include another device, which is not shown in FIG. 1.

The following describes the communication method provided in embodiments of this application in detail with reference to FIG. 6 to FIG. 12.

For example, FIG. 6 is a schematic flowchart 1 of a communication method according to an embodiment of this application. The communication method may be applicable to communication between the forwarding device 101 and the terminal device 102 and communication between the forwarding device 101 and the receiving device 103 in the communication system shown in FIG. 1. As shown in FIG. 6, the communication method includes the following steps.

S601: A terminal device sends sharing indication information to a forwarding device, and the forwarding device receives the sharing indication information from the terminal device.

The sharing indication information indicates to share first data, and the first data is to-be-shared data of the terminal device.

For example, the first data is the to-be-shared data of the terminal device, to be specific, the first data is data that needs to be sent by the terminal device to the forwarding device for sharing, or data that the terminal device indicates the forwarding device to share.

Optionally, the sharing indication information may include one or more of the following: a quantity of retransmissions of the first data or transmit power.

For example, the quantity of retransmissions is a quantity of times of sending to-be-shared data when the forwarding device sends the to-be-shared data in a broadcast manner. For example, when the to-be-shared data is the first data, if the quantity of retransmissions is 2, when sending the first data, the forwarding device sends each data packet twice in one broadcast period.

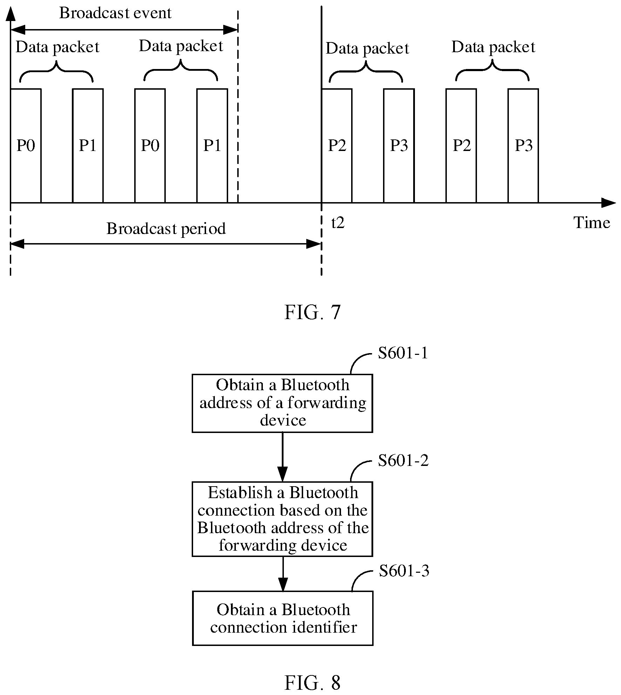

FIG. 7 is a schematic diagram of sending a data packet in Bluetooth broadcast. The following provides descriptions with reference to FIG. 7.

As shown in FIG. 7, the 1^{st} broadcast period ranges from a time point t1 to a time point t2. When Bluetooth is broadcasting, sent data includes data P0, data P1, data P2, and data P3. The data P0 and the data P1 belong to one data packet, and the data P2 and the data P3 belong to one data packet. A Bluetooth primary device sends one data packet each time. When the data P0 to the data P3 needs to be broadcast, the Bluetooth primary device sends the data based on a broadcast period and a quantity of retransmissions. Specifically, the Bluetooth primary device first sends the data P0 and the data P1 once in the 1^{st} broadcast period, and then sends the data P0 and the data P1 again in the 1^{st} broadcast period. In this way, the Bluetooth primary device needs to send a data packet twice, and the data packet sent each time may be received by a receiving device. Therefore, a probability that the receiving device receives data in the data packet increases each time a data packet is sent more than once. For example, in data sharing, if the quantity of retransmissions is 4, compared with a case in which the quantity of retransmissions is 2, a probability that the receiving device receives the first data increases.

For example, the transmit power is a value of power used by the forwarding device to send data.

For example, a maximum distance between the receiving device and the forwarding device is L. If current transmit power of the forwarding device cannot cover an area whose radius is L, the transmit power of the forwarding device may be adjusted, so that a receiving device whose distance from the forwarding device is greater than or equal to L can also receive the first data.

It may be understood that the sharing indication information may further include physical channel configuration information broadcast by the forwarding device.

In this way, the quantity of retransmissions of the forwarding device may be determined by using the terminal device. The first data is retransmitted for a plurality of times, to increase the probability that the receiving device receives the first data, so that reliability of data sharing can be improved. The transmit power of the forwarding device is determined by using the terminal device, so that a proper sharing range can be ensured.

For example, the terminal device may send the sharing indication information to the forwarding device in a wireless manner, for example, Bluetooth or Wi-Fi, or in a wired manner, for example, an optical fiber or a cable.

Optionally, before the terminal device sends the sharing indication information to the forwarding device, and the forwarding device receives the sharing indication information from the terminal device in S601, the communication method shown in FIG. 6 may further include step 1.

Step 1: The terminal device obtains second information.

The second information indicates the terminal device to start sharing of the first data, for example, send the sharing indication information to the forwarding device. The second information may be input by a user by using a human-computer interaction interface, or may be obtained from another device.

Optionally, before the terminal device sends the sharing indication information to the forwarding device, and the forwarding device receives the sharing indication information from the terminal device in S601, the communication method shown in FIG. 6 may further include step 2 and step 3.

Step 2: The terminal device obtains third information.

For example, the third information indicates the terminal device to play the first data, for example, audio data.

Step 3: The terminal device plays the first data based on the third information.

The third information may be input by using the human-computer interaction interface, or may be obtained from another device.

In a possible design scheme, before the terminal device sends the sharing indication information to the forwarding device, and the forwarding device receives the sharing indication information from the terminal device in S601, the communication method shown in FIG. 6 may further include step 4.

Step 4: The terminal device establishes a communication connection to the forwarding device.

For example, the terminal device determines whether there is a communication connection between the terminal device and the forwarding device. If there is no communication connection, the terminal device establishes a communication connection to the forwarding device. For example, the terminal device obtains a device address of the forwarding device, and establishes the communication connection to the terminal device based on the device address. It should be noted that, in this embodiment of this application, an establishment procedure of the communication connection may further be initiated by the forwarding device. For an implementation of establishing the communication connection by the forwarding device, refer to an implementation of establishing the communication connection by the terminal device. Details are not described herein again.

For example, the communication connection between the forwarding device and the terminal device may be implemented in a wireless manner, for example, Bluetooth or Wi-Fi, or may be implemented in a wired manner, for example, a cable or an optical fiber. This is not specifically limited in this embodiment of this application.

It may be understood that, in step 4, after the terminal device establishes the communication connection to the forwarding device, the forwarding device may send fourth information to the terminal device, to indicate that the communication connection between the forwarding device and the terminal device is successfully established.

It should be noted that, in this embodiment of this application, a sequence of step 1 to step 4 does not represent an execution sequence of the steps. For example, step 1 may be performed before step 2, may be performed between step 2 and step 3, or may be performed after step 3. Step 4 may be performed before step 2, may be performed between step 2 and step 3, or may be performed after step 3. Step 4 may be performed before step 2 or after step 2. The sequence of step 1 to step 4 is not specifically limited in this embodiment of this application.

To help understand a process of establishing a communication connection, the following uses establishing a communication connection based on Bluetooth and establishing a communication connection based on Wi-Fi as an example for description.

FIG. 8 is a schematic flowchart of establishing a communication connection between a forwarding device and a terminal device based on Bluetooth. As shown in FIG. 8, a step of establishing the communication connection between the forwarding device and the terminal device includes S601-1 to S601-3.

S601-1: The terminal device obtains a Bluetooth address of the forwarding device.

S601-2: The terminal device establishes a Bluetooth connection based on the Bluetooth address of the forwarding device.

S601-3: The terminal device obtains a Bluetooth connection identifier.

For example, the Bluetooth connection identifier is information corresponding to two devices that establish a communication connection based on Bluetooth, for example, the forwarding device and the terminal device, and may be for identifying the communication connection between the two devices.

The following provides further descriptions with reference to asynchronous connection-oriented (asynchronous connection-oriented, ACL) of Bluetooth.

Specifically, the terminal device scans Bluetooth by using a generic access profile (generic access profile, GAP) protocol of a Bluetooth host protocol stack, to obtain the Bluetooth address and name information of the forwarding device (usually a headset or the like). Then, the terminal device establishes an ACL connection with the forwarding device by using the GAP protocol of the Bluetooth host protocol stack. After the ACL connection is established, the terminal device obtains a connection identifier of the ACL connection. In this way, the communication connection is successfully established between the forwarding device and the terminal device.

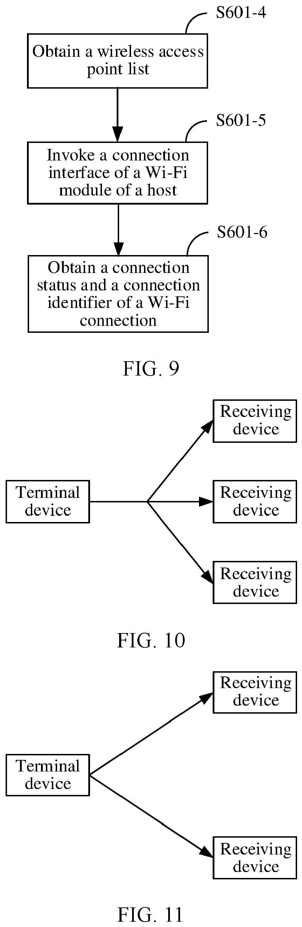

FIG. 9 is a schematic flowchart of establishing a communication connection between a forwarding device and a terminal device based on Wi-Fi. As shown in FIG. 9, a procedure of establishing the communication connection between the forwarding device and the terminal device based on Wi-Fi includes S601-4 to S601-6.

S601-4: The terminal device obtains a wireless access point (access point, AP) list.

For example, the terminal device may invoke a scanning interface of a host Wi-Fi module, to obtain the AP list.

S601-5: The terminal device invokes a connection interface of the Wi-Fi module in the terminal device based on a service set identifier (service set identifier, SSID) of the forwarding device.

For example, the SSID of the forwarding device may be determined based on a selection result of the AP list. For example, if the user selects the 3^{rd} SSID in the AP list by using the human-computer interaction interface, a device corresponding to the 3^{rd} SSID in the AP list is a forwarding device, and the 3^{rd} SSID in the AP list is an SSID of the forwarding device.

S601-6: The terminal device obtains a connection status and a connection identifier of the Wi-Fi connection.

The connection status indicates whether the Wi-Fi-based communication connection between the terminal device and the forwarding device is successfully established, signal quality, and the like. The identifier of the Wi-Fi connection is information corresponding to the communication connection established based on Wi-Fi, and may be for identifying the communication connection.

The foregoing processes of establishing the communication connection based on Bluetooth and Wi-Fi are merely used as examples, and do not specifically limit a manner of establishing the communication connection.

S602: The forwarding device obtains the first data.

The first data may be audio data. In this way, the audio data can be shared, and audio sharing quality can be improved.

It should be noted that, in this embodiment of this application, the first data may alternatively be data other than the first data, for example, video data or image data.

In a possible design scheme, that the forwarding device obtains the first data in S602 may include: The terminal device sends the first data to the forwarding device, and the forwarding device receives the first data from the terminal device. A Bluetooth device may be connected to the terminal device through Bluetooth.

For example, the terminal device sends the first data to the forwarding device through the communication connection between the forwarding device and the terminal device, for example, the Bluetooth-based communication connection, the Wi-Fi-based communication connection, or a wired connection.

Optionally, the terminal device may send the first data to the forwarding device in a unicast manner. In this way, the terminal device may send only one piece of high-quality shared data, so that sharing quality can be ensured, and an amount of shared data sent by a primary sharing device can be effectively reduced, thereby reducing resource overheads and power consumption of the primary sharing device, to consider both data sharing and another communication service. In this embodiment of this application, the unicast manner may also be referred to as a point-to-point manner. Unless otherwise specified, point-to-point refers to unicast below.

It should be noted that, in this embodiment of this application, the terminal device may alternatively send data in another manner. This is not specifically limited in this embodiment.

For example, the terminal device may divide the first data into data blocks for sending. After receiving the data blocks of the first data, the forwarding device may recombine the received data blocks to obtain the first data.

In a possible design scheme, that the forwarding device obtains the first data in S602 may include: The forwarding device receives the first data from the terminal device.

For example, the terminal device sends the first data to the Bluetooth device, and the forwarding device receives the first data by using a connection between the terminal device and the Bluetooth device.

For example, a point-to-point connection may be established between the terminal device and the Bluetooth device, for example, a Bluetooth point-to-point connection. Specifically, the Bluetooth point-to-point connection may be any one of the following: a conventional Bluetooth ACL connection, synchronous connection oriented (synchronous connection oriented, SCO), an extended synchronous connection oriented (extended synchronous connection oriented, eSCO) connection, an LE ACL connection, or a CIS connection.

Optionally, before the forwarding device receives the first data in S602, the communication method shown in FIG. 6 further includes receiving decryption information from the terminal device.

The decryption information is for parsing the first data transmitted between the terminal device and the Bluetooth device.

Specifically, the decryption information is for parsing data transmitted between the terminal device and the Bluetooth device through the Bluetooth connection, to obtain the first data. For example, a ciphertext of the first data may be transmitted between the terminal device and the Bluetooth device. When the terminal device and the Bluetooth device are connected through Bluetooth, the forwarding device may set decryption information of a hardware circuit based on the decryption information. In this way, after receiving the ciphertext of the first data, the forwarding device may decrypt the ciphertext of the first data by using the hardware circuit for which the decryption information is set, to obtain a plaintext of the first data.

Optionally, the decryption information may include an EN_RAND random number (for key encryption), a connection key, an address of a Bluetooth-connected primary device, a Bluetooth clock of a primary device, an authenticated ciphering offset (authenticated ciphering offset, ACO), and an offset value of the Bluetooth clock of the primary device relative to a Bluetooth clock of a connected primary device.

For example, the forwarding device may first obtain an encryption key based on the decryption information, and then set the decryption information of the hardware circuit based on the decryption information and the encryption key, to parse the first data.

Alternatively, optionally, the decryption information may include the encryption key, an EN_RAND random number, a Bluetooth clock of a primary device, an address of a Bluetooth-connected primary device, and an offset value of the Bluetooth clock of the primary device relative to a Bluetooth clock of an audio-connected primary device.

It should be noted that a sync word may be 64 bits, the EN_RAND random number may be 128 bits, the authenticated ciphering offset may be 96 bits, and the encryption key may be 128 bits. Any one of the sync word, the EN_RAND random number, and the authenticated ciphering offset may alternatively be another quantity of bits. This is not specifically limited in this embodiment of this application.

In this way, the terminal device sends the decryption information including the encryption key to the forwarding device, so that the forwarding device can be prevented from calculating the encryption key, thereby reducing data processing time of the forwarding device, and reducing a sharing delay.

Further, the decryption information may further include other information, such as a sync word (sync word) and/or a Bluetooth frequency hopping table.

In this way, the first data can be parsed by using more information, so that monitoring efficiency can be improved, and reliability of the first data can be further improved.

In this embodiment of this application, the decryption information may further indicate to monitor the data transmitted between the terminal device and the Bluetooth device.

Optionally, the forwarding device may further send fifth information to the terminal device based on the decryption information, where the fifth information indicates whether the connection between the terminal device and the Bluetooth device is successfully monitored, that is, whether monitoring is successfully started. In other words, that is whether the forwarding device can obtain the first data transmitted between the terminal device and the Bluetooth device.

In this way, the forwarding device may parse, based on the decryption information provided by the terminal device, the first data transmitted between the terminal device and the Bluetooth device, and the terminal device does not need to send the first data to the forwarding device. This can further reduce resource overheads of the terminal device.

In this embodiment, for an implementation of a solution in which the forwarding device monitors the first data based on the decryption information, refer to an implementation of an existing monitoring solution in wireless communication. Details are not described herein again.

Optionally, before the forwarding device obtains the first data in S602, the communication method shown in FIG. 6 may further include: The forwarding device sends first information to the terminal device.

The first information indicates that the sharing indication information has been received. Alternatively, the first information is for requesting the first data.

In this way, the terminal device may send the first data based on the first information, so that reliability of the first data received by the forwarding device can be improved, and an effect of data sharing can be further improved.

For example, the communication method shown in FIG. 6 may further include step 5 to step 7.

Step 5: The forwarding device starts a broadcast connection.

Step 6: The forwarding device sends synchronization information.

For example, the forwarding device may repeatedly send the synchronization information at a specific time interval.

Step 7: The receiving device scans the broadcast connection based on the synchronization information, to synchronize with a clock of the forwarding device.

The synchronization information is for determining a receiving parameter of the receiving device. For example, the receiving parameter of the receiving device may include one or more of the following: a physical channel for broadcast, transmit power, a quantity of retransmissions, and the like.

In this way, the terminal device may send higher-quality first data to the forwarding device, to further improve the effect of data sharing.

S603: The forwarding device sends the first data to a plurality of receiving devices in a radio broadcast manner based on the sharing indication information, and the receiving devices receive the first data.

For example, the receiving device is a to-be-shared object. In other words, the receiving device is a device that receives and plays the first data.

For example, the radio broadcast manner may be a broadcast manner based on a short-range wireless communication technology. In this way, impact of a network status on a data sharing process can be avoided, and sharing efficiency can be improved.

Optionally, short-range wireless communication may include one or more of the following: Bluetooth communication or wireless fidelity communication. In this way, data may be sent in a Bluetooth or wireless fidelity broadcast manner, and both the sharing efficiency and a quantity of shared devices are considered.

For an implementation of a broadcast solution of the forwarding device, refer to an implementation of a broadcast solution in an existing communication method, for example, an implementation of a Bluetooth broadcast solution. Details are not described herein again.

In this way, the forwarding device may send the first data to the plurality of receiving devices, so that air interface resources occupied when the first data is separately sent to the receiving devices can be reduced, and higher-quality data can be sent. Therefore, quality of the sent first data can be further improved when the quantity of shared devices is ensured.

It should be noted that, in this embodiment of this application, when sharing the first data with the plurality of receiving devices, the forwarding device may alternatively send the first data in another manner, for example, in a point-to-point manner. In this embodiment of this application, a manner of sending the first data by the forwarding device is not specifically limited.

Optionally, the forwarding device sends the first data to the receiving device by using a plurality of data packets. In other words, the first data may be divided into different data packets.

In a possible design scheme, the forwarding device may include a first communication module and a second communication module.

The first communication module is configured to receive the first data, and the second communication module is configured to send the first data.

For example, either of the first communication module or the second communication module may be a Bluetooth module, or may be a Wi-Fi module. This is not specifically limited in this embodiment of this application.

In this way, a receiving function and a sending function can be separated, thereby avoiding mutual influence between a data receiving function and a data sending function, and further improving data sharing quality.

It should be noted that the first communication module and the second communication module may include one or more communication components or assemblies, and each communication component or assembly may be configured to implement a data receiving and/or sending function.

Optionally, before the forwarding device sends the first data to the plurality of receiving devices in the radio broadcast manner based on the sharing indication information, and the receiving device receives the first data in S603, the method further includes step 8.

Step 8: The forwarding device sends feedback information to the terminal device.

The feedback information indicates whether the first data is successfully transmitted. For example, the feedback information may indicate whether the received first data is damaged and whether the first data is successfully decoded.

Optionally, before the forwarding device sends the first data to the plurality of receiving devices based on the sharing indication information in S603, the method shown in FIG. 6 may further include step 9.

Step 9: The forwarding device converts encoding of the first data.

For example, an encoding format of the first data may be converted based on an encoding format of data sent by the forwarding device. For example, the forwarding device receives and buffers the first data, and if the encoding format of the first data does not conform to the encoding format of the data sent by the forwarding device, the encoding format of the received first data is converted into the encoding format of the sent data. Alternatively, the encoding format of the first data may be converted based on a channel state between the forwarding device and the receiving device. For example, if the channel state between the forwarding device and the receiving device is good, the first data may be converted into a higher-quality encoding format. If the channel state between the forwarding device and the receiving device is poor, the first data may be converted into a lower-quality encoding format. Alternatively, the encoding format of the first data may be converted based on resource usage between the forwarding device and the receiving device. For example, if a frequency resource between the forwarding device and the receiving device is occupied, the first data may be converted into an encoding format that is more suitable for sending on an unoccupied frequency resource.

It should be noted that, in this embodiment of this application, a sequence of step 8 and step 9 does not represent an execution sequence of the steps. For example, step 9 may alternatively be performed before step 8.

For example, the forwarding device may further send receiving indication information to the receiving device. The receiving indication information indicates to receive the first data, for example, the audio data. The receiving indication information may be input by using the human-computer interaction interface of the forwarding device, or may be obtained by the forwarding device from another device.

That the receiving device receives the first data may include: The receiving device obtains the receiving indication information from the forwarding device, and then the receiving device determines whether there is a broadcast connection between the receiving device and the forwarding device.

For example, if the receiving device and the forwarding device are connected based on low energy Bluetooth, the receiving device may query, through an interface of the Bluetooth host protocol stack, whether there is a broadcast connection currently. The broadcast connection may be identified by using a connection identifier. If there is no broadcast connection between the receiving device and the forwarding device, the receiving device obtains the synchronization information from periodic broadcast by scanning the periodic broadcast, and establishes the broadcast connection based on the synchronization information. Specifically, the receiving device starts, through the interface of the Bluetooth host protocol stack, a Bluetooth periodic broadcast scanning procedure and a Bluetooth synchronization information reporting procedure. Then, the host protocol stack of the receiving device sends a command for scanning the periodic broadcast to a Bluetooth module on the receiving device. The Bluetooth module on the receiving device starts the Bluetooth periodic broadcast scanning, and if the periodic broadcast sent by the terminal device is obtained by scanning, the Bluetooth module obtains the synchronization information, for example, synchronization information of the low energy Bluetooth, from the scanned periodic broadcast. After receiving the synchronization information, the Bluetooth module reports the synchronization information to the receiving device by using the Bluetooth host protocol stack. For example, the Bluetooth host protocol stack reports the synchronization information in a form of a Bluetooth host control interface (host controller interface, HCI) event.

The receiving device sends, based on the received synchronization information by using the Bluetooth host protocol stack, a command for establishing a Bluetooth connection to the Bluetooth module on the receiving device. After receiving the command, the Bluetooth module on the receiving device starts to establish the Bluetooth connection. After the Bluetooth connection is successfully established, the Bluetooth module reports a message indicating that the Bluetooth connection is successfully established to the Bluetooth host protocol stack, and receives audio data. After receiving the audio data, the Bluetooth module reports the received audio data to the Bluetooth host protocol stack. Specifically, the Bluetooth module may continuously report the received audio data to the Bluetooth host protocol stack.

If there is a broadcast connection between the receiving device and the forwarding device, the receiving device receives the audio data.

It may be understood that after receiving the audio data, the receiving device may further buffer the audio data.

It should be noted that Bluetooth in this embodiment of this application may be the low energy Bluetooth.

The communication method shown in FIG. 6 may further include: The receiving device processes the first data.

For example, the receiving device may store the first data, or may perform an operation, for example, playing based on a specific type of the first data. For example, if the forwarding device sends the first data to the receiving device by using the plurality of data packets, the receiving device may combine the plurality of data packets into complete first data, and then the combined first data is decoded, stored, or the like. For example, if the first data is audio data, after receiving the audio data from the forwarding device, the receiving device may play the audio data by using an audio module. If the first data is video data, after receiving the first data, the receiving device may play the video data.

It should be noted that, in this embodiment of this application, a sequence of step S601 to step S603 does not represent an execution sequence of the steps. For example, step S602 may alternatively be performed before step S601.

It should be noted that, in this embodiment of this application, information transmitted between the forwarding device and the terminal device may be sent in a specific format.

For example, information that is used by the terminal device to control a sharing process of the terminal device, which is referred to as sharing control information for short below, may include sharing indication information, sharing stop information, monitoring start information (decryption information), and monitoring stop information. The sharing stop information indicates the terminal device to stop sharing the first data. When the terminal device sends the sharing indication information, the sharing stop information, the monitoring start information, or the monitoring stop information, the sent information may include an identifier of the sharing control information, and an identifier in the sharing indication information or the sharing stop information.

**Table 1**

| Information field | Data type | Identifier |
|---|---|---|
| Field 1 | Sharing control information | 0 |
| Field 2 | Sharing indication information | 0 |
| | Sharing stop information | 1 |
| | Monitoring start information | 2 |
| | Monitoring stop information | 3 |

As shown in Table 1, 0 may be used to represent the sharing indication information, 1 may be used to represent the sharing stop information, 2 may be used to represent starting monitoring, and 3 may be used to represent stopping monitoring. In this case, composition of the sharing indication information is "00", composition of the sharing stop information is "01", composition of the monitoring start information is "02", and composition of the monitoring stop information is "03". If a response message is sent by the forwarding device to the terminal device, the response message may be represented by 2. As shown in Table 2, a data packet corresponding to the sharing control information may include a plurality of pieces of the following content: the sharing control information corresponding to the field 1, and one of the sharing indication information, the sharing stop information, the monitoring start information, or the monitoring stop information corresponding to the field 2, or the identifier 1 corresponding to the field 1, and the identifier 0, 1, 2, or 3 corresponding to the field 2.

For another example, the first data sent by the terminal device to the forwarding device may be sent in a form of a data packet. Specifically, as shown in Table 2, a data packet corresponding to the first data may include the following content: data transmission information corresponding to a field 1, a data block length corresponding to a field 2, and a data block of the first data corresponding to a field 3, or identifiers: 1 and 0 sequentially corresponding to the field 1 and the field 2, and the data block of the first data corresponding to the field 3.

**Table 2**

| Information field | Data type | Identifier |
|---|---|---|
| Field 1 | Data transmission information | 1 |
| Field 2 | Data block length | 0 |
| Field 3 | Data block of the first data | None |

For another example, the first information sent by the forwarding device to the terminal device may include content shown in Table 3: an information response corresponding to a field 1, a sharing indication information response corresponding to a field 2, and a sharing failure or a sharing success corresponding to a field 3, or identifiers sequentially corresponding to the field 1, the field 2, and the field 3. For example, if 0 indicates the sharing success, and 1 indicates the sharing failure, when sharing succeeds, the content of the first information may sequentially include 2, 1, and 0.

**Table 3**

| Information field | Data type | Identifier |
|---|---|---|
| Field 1 | Information response | 2 |
| Field 2 | Sharing indication information response | 1 |
| Field 3 | Sharing failure | 1 |
| | Sharing success | 0 |

For still another example, the fifth information sent by the forwarding device to the terminal device may include content shown in Table 4: an information response corresponding to a field 1, a decryption information response corresponding to a field 2, and one of a monitoring start failure and a monitoring start success corresponding to a field 3. For example, 0 indicates the monitoring start success, and 1 indicates the monitoring start failure. If monitoring is started successfully, the information sent by the forwarding device to the terminal device may include "200".

**Table 4**

| Information field | Data type | Identifier |
|---|---|---|
| Field 1 | Information response | 2 |
| Field 2 | Decryption information response | 0 |
| Field 3 | Monitoring start failure | 1 |
| | Monitoring start success | 0 |

To further describe technical effects of embodiments of this application, the following provides descriptions with reference to FIG. 10 and FIG. 11.

FIG. 10 is a schematic diagram of an existing Bluetooth broadcast connection. As shown in FIG. 10, a terminal device is connected to a plurality of receiving devices. The terminal device needs to send audio data for a plurality of times in a broadcast manner, and consequently, a large quantity of air interface resources are consumed. FIG. 11 is a schematic diagram of an existing Bluetooth point-to-point connection. As shown in FIG. 11, a terminal device respectively establishes a point-to-point connection to each receiving device. When the terminal device sends data to the receiving device once, an additional air interface resource needs to be occupied.

It can be easily learned that, in the two architectures in FIG. 10 and FIG. 11, the terminal device consumes a large quantity of air interface resources to share first data. However, in this embodiment of this application, the forwarding device obtains the first data in a monitoring manner and shares the first data, or the terminal device sends the first data to the forwarding device in a unicast (point-to-point) manner. In this way, the terminal device can avoid consuming an air interface resource to send the data to the forwarding device, or the terminal device can share the data with the plurality of receiving devices by consuming only an air interface resource for sending the first data to the forwarding device. This can reduce resource overheads.

Based on the communication method shown in FIG. 6, the forwarding device (namely, an auxiliary sharing device) may obtain the first data, and share the first data with the plurality of receiving terminals (namely, shared devices) based on the sharing indication information of the terminal device (namely, a primary sharing device). That is, the forwarding device may assist the terminal device in completing data sharing. The primary sharing device may be a device with a limited air interface resource and/or transmit power, and the auxiliary sharing device may be a device with an unlimited air interface resource and/or transmit power. In this way, the terminal device may send the first data to the forwarding device in a communication manner, for example, Wi-Fi or wired communication. Because the Wi-Fi communication occupies a wider frequency band at a same moment, the Wi-Fi communication has a higher rate than the short-range wireless communication technology, for example, Bluetooth. However, the wired manner can further get rid of a rate limitation of the short-range wireless communication such as the Bluetooth and Wi-Fi communication. Therefore, a larger amount of data can be sent per unit of time by using each of the two manners. In addition, after obtaining high-quality to-be-shared data, the forwarding device may share the data to the plurality of receiving terminals such as Bluetooth speakers in the radio broadcast manner, so that the high-quality to-be-shared data can be sent, and sharing quality can be ensured. Alternatively, the terminal device sends the to-be-shared data to the forwarding device, and may send different parts of the to-be-shared data by using an air interface resource for repeatedly sending the to-be-shared data, to implement sharing of higher-quality to-be-shared data. This not only ensures sharing quality, but also reduces an amount of data sent by the terminal device. Therefore, resource overheads and power consumption of the primary sharing device are reduced, to consider a data sharing service and another service.

In addition, as a relay device for sharing data by the terminal device, the forwarding device can share the data with more devices, to expand a sharing range, thereby improving data sharing efficiency.

In addition, the terminal device may send the data to the forwarding device by using lower transmit power, to reduce power consumption and prolong standby time.

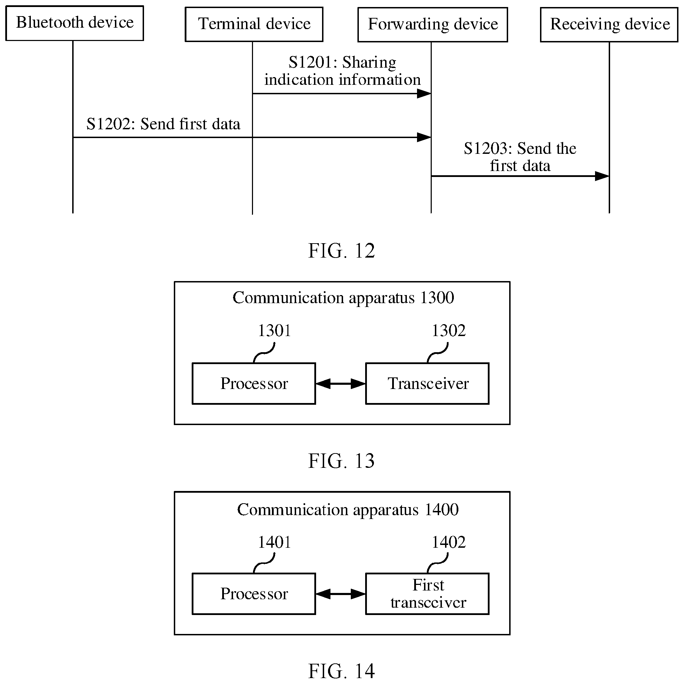

For example, FIG. 12 is a schematic flowchart 2 of a communication method according to an embodiment of this application. The communication method may be applicable to communication between the forwarding device 101 and the terminal device 102 and communication between the forwarding device 101 and the receiving device 103 in the communication system shown in FIG. 1. As shown in FIG. 12, the communication method includes the following steps.

S1201: A terminal device sends sharing indication information to a forwarding device, and the forwarding device receives the sharing indication information from the terminal device.

The sharing indication information indicates to share first data, and the first data is to-be-shared data of the terminal device.

Optionally, the sharing indication information may include one or more of the following: a quantity of retransmissions of the first data or transmit power.

It may be understood that the sharing indication information may further include a physical channel broadcast by the forwarding device.

In a possible design scheme, the forwarding device may include a first communication module and a second communication module. The first communication module is configured to receive the first data, and the second communication module is configured to send the first data.

Optionally, before the terminal device sends the sharing indication information to the forwarding device, and the forwarding device receives the sharing indication information from the terminal device in S1201, the communication method shown in FIG. 12 may further include step 10.

Step 10: The terminal device obtains second information.

For an implementation of step 10, refer to an implementation of step 1 in the foregoing embodiment. Details are not described herein again.

In the communication system shown in FIG. 1, further, the communication method shown in FIG. 12 may further include step 11 to step 15.

Step 11: The terminal device obtains third information.

Step 12: The terminal device plays the first data based on the third information.

In a possible design scheme, before the terminal device sends the sharing indication information to the forwarding device, and the forwarding device receives the sharing indication information from the terminal device in S1201, the communication method shown in FIG. 12 may further include step 13.

Step 13: The terminal device establishes a communication connection to the forwarding device.

For implementations of step 10 to step 13, refer to implementations of step 1 to step 4. Details are not described herein again.

It should be noted that, in this embodiment of this application, a sequence of step 11 to step 13 does not represent an execution sequence of the steps.

It may be understood that the forwarding device may send fourth information to the terminal device, to indicate that the communication connection is successfully established between the forwarding device and the terminal device.

S 1202: The forwarding device obtains the first data.

In a possible design scheme, that the forwarding device obtains the first data may further include: The forwarding device receives the first data from a Bluetooth device.

For example, if the Bluetooth device sends the first data to the terminal device, the forwarding device may receive the first data. In other words, the forwarding device obtains the first data by monitoring data transmitted between the Bluetooth device and the terminal device.

In this way, the first data may alternatively be provided by the Bluetooth device, so that an air interface resource of the terminal device can be further reduced, to further reduce resource overheads and power consumption of the terminal device. In addition, the power consumption of the terminal device can be further reduced, and an application scenario of data sharing can be expanded, thereby improving applicability and flexibility.

For example, when the first data is audio data, the data may be transmitted between the terminal device and the Bluetooth device through an A2DP connection.

The following describes a process of establishing an A2DP audio connection with reference to the fact that the terminal device is a primary device in a Bluetooth connection and the Bluetooth device is a slave device in the Bluetooth connection.

The terminal device establishes an ACL connection to the Bluetooth device. For an implementation of a solution of establishing the ACL connection, refer to the manner of establishing the communication connection based on Bluetooth in FIG. 8. Details are not described herein again. The terminal device establishes the A2DP connection to the Bluetooth device by using an A2DP protocol of a Bluetooth host protocol stack. Specifically, the terminal device inputs an ACL connection identifier, and returns a connection status of the A2DP connection, to complete establishment of the A2DP connection. After receiving the third information from a human-computer interaction interface, or receiving the third information from the Bluetooth device through the A2DP connection, the terminal device plays audio by using the A2DP protocol.

In this way, the first data may alternatively be provided by the Bluetooth device, so that the power consumption of the terminal device can be further reduced, and the application scenario of data sharing can be expanded, thereby improving the applicability and the flexibility.

Further, before the forwarding device obtains the first data in S 1202, the communication method shown in FIG. 12 may further include: The forwarding device sends first information to the terminal device.

The first information indicates that the sharing indication information has been received. Alternatively, the first information is for requesting the first data.

For example, before the forwarding device obtains the first data in S1202, the communication method shown in FIG. 12 may further include step 12.

Step 15: The forwarding device receives decryption information from the terminal device.

For specific implementation and a technical effect of step 15, refer to an implementation and a technical effect of receiving the decryption information by the forwarding device from the terminal device in step S602. Details are not described herein again.

Further, before the forwarding device obtains the first data in S1202, the communication method shown in FIG. 12 may further include step 16.

Step 16: The forwarding device sends monitoring response information to the terminal device.

The monitoring response information indicates whether the forwarding device successfully starts monitoring.

For example, before the forwarding device obtains the first data, the communication method shown in FIG. 12 may further include step 17 to step 20.

Step 17: The forwarding device starts monitoring an audio connection.

Step 18: The forwarding device starts a broadcast connection.

Step 19: The forwarding device sends synchronization information.

For example, the forwarding device may send the synchronization information in a form of periodic broadcast.

Step 20: A receiving device scans the broadcast connection based on the synchronization information, and synchronizes with the forwarding device.

For implementations of step 18 to step 20, refer to implementations of step 5 to step 7. Details are not described herein again.

S1203: The forwarding device sends the first data to a plurality of receiving devices in a radio broadcast manner based on the sharing indication information, and the receiving devices receive the first data.

For an implementation of the radio broadcast manner, refer to an implementation in step S603. Details are not described herein again. Optionally, before the forwarding device sends the first data to the plurality of receiving devices based on the sharing indication information, and the receiving devices obtain the first data in S1203, the communication method shown in FIG. 12 further includes step 21.

Step 21: The forwarding device converts encoding of the first data.

For an implementation of step 21, refer to an implementation of step 9. Details are not described herein again.

In this embodiment of this application, the communication method shown in FIG. 12 may further include: The receiving device performs corresponding processing based on the first data.

For implementation in which the receiving device performs corresponding processing based on the first data, refer to an implementation in which the receiving device processes the first data in the communication method shown in FIG. 6. Details are not described herein again.

For specific implementation and technical effects of step S1201 to step S1203, refer to implementations and technical effects of step S601 to step S603 in the communication method shown in FIG. 6. Details are not described herein again. It should be noted that in this embodiment of this application, the first data is data from a same data source. When the first data is transmitted in different devices, specific forms, for example, encoding formats, may be different.

The foregoing describes in detail the communication methods provided in embodiments of this application with reference to FIG. 6 to FIG. 12. The following describes, in detail with reference to FIG. 13 to FIG. 15, communication apparatuses configured to perform the communication methods provided in embodiments of this application.

For example, FIG. 13 is a schematic diagram 1 of a structure of a communication apparatus according to an embodiment of this application. As shown in FIG. 13, the communication apparatus 1300 may be applicable to the communication system shown in FIG. 1, and perform a function of the forwarding device in the communication method shown in FIG. 6 or FIG. 12. The communication apparatus 1300 includes a processor 1301 and a transceiver 1302 coupled to the processor 1301.

The processor 1301 is configured to: receive sharing indication information from a terminal device through the transceiver 1302, where the sharing indication information indicates to share first data, and the first data is to-be-shared data of the terminal device; obtain the first data through the transceiver 1302; and control the transceiver 1302 to send the first data to a plurality of receiving devices in a radio broadcast manner based on the sharing indication information.

In a possible design scheme, the transceiver supports short-range wireless communication, and the radio broadcast manner is a broadcast manner based on a short-range wireless communication technology.

Further, the short-range wireless communication includes one or more of the following: Bluetooth communication or wireless fidelity communication.

In a possible design scheme, the first data is audio data.

Optionally, the processor 1301 is configured to receive the first data from a Bluetooth device through the transceiver 1302. The Bluetooth device may be connected to the terminal device through Bluetooth.

Alternatively, optionally, the processor 1301 is configured to receive the first data from the terminal device through the transceiver 1302.

Further, the processor is further configured to receive decryption information from the terminal device through the transceiver. The decryption information is for parsing the first data transmitted between the terminal device and the Bluetooth device.

Further, the processor 1301 is further configured to send first information to the terminal device through the transceiver 1302. The first information indicates that the sharing indication information has been received. Alternatively, the first information is for requesting the first data.

In a possible design scheme, the sharing indication information may include one or more of the following: a quantity of retransmissions of the first data or transmit power.

In a possible design scheme, the forwarding device may include a first communication module and a second communication module. The first communication module is configured to receive the first data, and the second communication module is configured to send the first data.

In a possible design scheme, the communication apparatus may be a home intelligent terminal or a Bluetooth carry-on companion.

Optionally, the transceiver 1302 may be a transceiver circuit or an interface circuit. The transceiver may be used by the communication apparatus 1300 to communicate with another communication apparatus.

Optionally, the communication apparatus 1300 may further include a storage module (not shown in FIG. 13), and the storage module stores a program or instructions. When the processor 1301 executes the program or the instructions, the communication apparatus 1300 is enabled to perform the function of the forwarding device in the communication method shown in any one of FIG. 6 or FIG. 12.

It should be understood that the processor 1301 in the communication apparatus 1300 may alternatively be implemented by a processor-related circuit component, and may be a processing unit. The transceiver may alternatively be implemented by a transceiver-related circuit component, and may be a transceiver unit.

It should be noted that the communication apparatus 1300 may be the forwarding device shown in FIG. 1, may be a chip (system) or another component or assembly that may be disposed in the forwarding device, or may be an apparatus including the forwarding device. This is not limited in this application.

In addition, for a technical effect of the communication apparatus 1300, refer to a technical effect of the communication method shown in any one of FIG. 6 or FIG. 12. Details are not described herein again.

For example, FIG. 14 is a schematic diagram 2 of a structure of a communication apparatus according to an embodiment of this application. As shown in FIG. 14, the communication apparatus 1400 includes a processor 1401, and a first transceiver coupled to the processor 1401. For ease of description, FIG. 14 shows only main components of the communication apparatus.

In some embodiments, the communication apparatus 1400 may be applicable to the communication system shown in FIG. 1, and perform a function of the terminal device in the communication system shown in FIG. 6 or FIG. 12.

The processor 1401 is configured to: send sharing indication information to a forwarding device through the first transceiver 1402, to indicate the forwarding device to share to-be-shared first data of the terminal device; and send the first data to the forwarding device in a unicast manner through the first transceiver.

The processor 1401 is further configured to receive first information from the forwarding device through the first transceiver 1402. The first information indicates that the sharing indication information has been received. Alternatively, the first information is for requesting the first data.

In a possible design scheme, the sharing indication information may include one or more of the following: a quantity of retransmissions of the first data or transmit power.

Optionally, the communication apparatus 1400 may further include a second transceiver, where the second transceiver shares an antenna with the first transceiver in a time division multiplexing manner.

For example, the first transceiver is a transceiver based on a Bluetooth technology, and the second transceiver is a transceiver based on a Wi-Fi technology.

Optionally, the first transceiver 1402 may be a transceiver circuit or an interface circuit. The transceiver may be used by the communication apparatus 1400 to communicate with another communication apparatus.

Optionally, the communication apparatus 1400 may further include a storage module (not shown in FIG. 14), and the storage module stores a program or instructions. When the processor 1401 executes the program or the instructions, the communication apparatus 1400 is enabled to perform the function of the terminal device in the communication method shown in FIG. 6.

It should be understood that the processor 1401 in the communication apparatus 1400 may be implemented by a circuit component, and may be a processing unit. The transceiver 1402 may be implemented by a circuit component, and may be a transceiver unit.

It should be noted that the communication apparatus 1400 may be the terminal device shown in FIG. 1, may be a chip (system) or another component or assembly disposed in the terminal device, or an apparatus including the terminal device. This is not limited in this embodiment of this application.

In addition, for a technical effect of the communication apparatus 1400, refer to a technical effect of the communication method shown in any one of FIG. 6 or FIG. 12. Details are not described herein again.

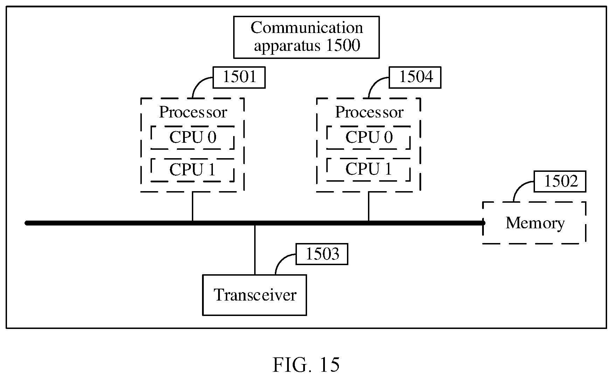

For example, FIG. 15 is a schematic diagram 3 of a structure of a communication apparatus according to an embodiment of this application. The communication apparatus may be a terminal device or a network device, or may be a chip (system) or another component or assembly that may be disposed in the terminal device or the network device. As shown in FIG. 15, the communication apparatus 1500 may include a processor 1501. Optionally, the communication apparatus 1500 may further include a memory 1502 and/or a transceiver 1503. The processor 1501 is coupled to the memory 1502 and the transceiver 1503, for example, may be connected by using a communication bus.

The following describes components of the communication apparatus 1500 in detail with reference to FIG. 15.

The processor 1501 is a control center of the communication apparatus 1500, and may be one processor, or may be a collective name of a plurality of processing elements. For example, the processor 1501 is one or more central processing units (central processing units, CPUs), or may be an application-specific integrated circuit (application-specific integrated circuit, ASIC), or is configured as one or more integrated circuits implementing embodiments of this application, for example, one or more microprocessors (digital signal processors, DSPs) or one or more field programmable gate arrays (field programmable gate arrays, FPGAs).

Optionally, the processor 1501 may perform various functions of the communication apparatus 1500 by running or executing a software program stored in the memory 1502 and invoking data stored in the memory 1502.

During specific implementation, in an embodiment, the processor 1501 may include one or more CPUs such as a CPU 0 and a CPU 1 shown in FIG. 15.

During specific implementation, in an embodiment, the communication apparatus 1500 may alternatively include a plurality of processors such as the processor 1501 and a processor 1504 shown in FIG. 2. Each of the processors may be a single-core processor (single-CPU) or a multicore processor (multi-CPU). The processor may be one or more devices, circuits, and/or processing cores configured to process data (for example, computer program instructions).

The memory 1502 is configured to store a software program for executing the solutions of this application, and the processor 1501 controls execution. For a specific implementation, refer to the foregoing method embodiments. Details are not described herein again.

Optionally, the memory 1502 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of an instruction structure or a data structure and that can be accessed by a computer, but is not limited thereto. The memory 1502 may be integrated with the processor 1501, or may exist independently, and is coupled to the processor 1501 by using an interface circuit (not shown in FIG. 15) of the communication apparatus 1500. This is not specifically limited in this embodiment of this application.

The transceiver 1503 is configured to communicate with another communication apparatus. For example, the communication apparatus 1500 is a terminal device, and the transceiver 1503 may be configured to communicate with a network device or communicate with another terminal device. For another example, the communication apparatus 1500 is a network device, and the transceiver 1503 may be configured to communicate with a terminal device or communicate with another network device.

Optionally, the transceiver 1503 may include a receiver and a transmitter (not separately shown in FIG. 15). The receiver is configured to implement a receiving function, and the transmitter is configured to implement a sending function.

Optionally, the transceiver 1503 may be integrated with the processor 1501, or may exist independently, and is coupled to the processor 1501 by using an interface circuit (not shown in FIG. 15) of the communication apparatus 1500. This is not specifically limited in this embodiment of this application.

It should be noted that the structure of the communication apparatus 1500 shown in FIG. 15 does not constitute a limitation on the communication apparatus. An actual communication apparatus may include more or fewer components than those shown in the figure, or combine some components, or have different component arrangements.

In addition, for a technical effect of the communication apparatus 1500, refer to a technical effect of the communication method in the foregoing method embodiments. Details are not described herein again.

An embodiment of this application further provides a chip system, including a processor. The processor is coupled to a memory, and the memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

An embodiment of this application provides a communication system. The communication system includes a forwarding device, a terminal device, and a plurality of receiving devices.

Optionally, the communication system may further include a Bluetooth device.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of random access memories (random access memories, RAMs) can be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement embodiments, all or some of the foregoing embodiments may be implemented in a form of a computer program product. The computer program product includes one or more computer instructions or computer programs. When the program instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a forwarding device, wherein the method comprises:
receiving sharing indication information from a terminal device, wherein the sharing indication information indicates to share first data, and the first data is to-be-shared data of the terminal device;
obtaining the first data; and
sending the first data to a plurality of receiving terminals in a radio broadcast manner based on the sharing indication information.

2. The communication method according to claim 1, wherein the radio broadcast manner is a broadcast manner based on a short-range wireless communication technology.

3. The communication method according to claim 2, wherein short-range wireless communication comprises one or more of the following: Bluetooth communication or wireless fidelity communication.

4. The communication method according to any one of claims 1 to 3, wherein the first data is audio data.

5. The communication method according to any one of claims 1 to 4, wherein the obtaining the first data comprises any one of the following:
receiving the first data from a Bluetooth device, wherein the Bluetooth device is connected to the terminal device through Bluetooth; or
receiving the first data from the terminal device.

6. The communication method according to claim 5, wherein before the obtaining the first data, the method further comprises:
receiving decryption information from the terminal device, wherein the decryption information is for parsing the first data transmitted between the terminal device and the Bluetooth device.

7. The communication method according to claim 5, wherein before the receiving the first data from the terminal device, the method further comprises:
sending first information to the terminal device, wherein
the first information indicates that the sharing indication information has been received; or
the first information is for requesting the first data.

8. The communication method according to any one of claims 1 to 7, wherein the sharing indication information comprises one or more of the following: a quantity of retransmissions of the first data or transmit power.

9. A communication method, applied to a terminal device, wherein the method comprises:
sending sharing indication information to a forwarding device, to indicate the forwarding device to share to-be-shared first data of the terminal device; and
sending the first data to the forwarding device in a unicast manner.

10. The communication method according to claim 9, wherein before the sending the first data to the forwarding device, the method further comprises:
receiving first information from the forwarding device, wherein
the first information indicates that the sharing indication information has been received; or
the first information is for requesting the first data.

11. The communication method according to claim 9 or 10, wherein the sharing indication information comprises one or more of the following: a quantity of retransmissions of the first data or transmit power.

12. A communication apparatus, wherein the communication apparatus comprises a processor and a transceiver coupled to the processor, wherein
the processor is configured to:
receive sharing indication information from a terminal device through the transceiver, wherein the sharing indication information indicates to share first data, and the first data is to-be-shared data of the terminal device;
obtain the first data through the transceiver; and
control the transceiver to send the first data to a plurality of receiving terminals in a radio broadcast manner based on the sharing indication information.

13. The communication apparatus according to claim 12, wherein the transceiver supports short-range wireless communication, and the radio broadcast manner is a broadcast manner based on a short-range wireless communication technology.

14. The communication apparatus according to claim 13, wherein the short-range wireless communication comprises one or more of the following: Bluetooth communication or wireless fidelity communication.

15. The communication apparatus according to any one of claims 12 to 14, wherein the first data is audio data.

16. The communication apparatus according to any one of claims 12 to 15, wherein the processor is configured to:
receive the first data from a Bluetooth device through the transceiver, wherein the Bluetooth device is connected to the terminal device through Bluetooth; or
receive the first data from the terminal device through the transceiver.

17. The communication apparatus according to claim 16, wherein the processor is further configured to receive decryption information from the terminal device through the transceiver, wherein the decryption information is for parsing the first data transmitted between the terminal device and the Bluetooth device.

18. The communication apparatus according to claim 16, wherein the processor is further configured to send first information to the terminal device through the transceiver, wherein
the first information indicates that the sharing indication information has been received; or
the first information is for requesting the first data.

19. The communication apparatus according to any one of claims 12 to 18, wherein the sharing indication information comprises one or more of the following: a quantity of retransmissions of the first data or transmit power.

20. The communication apparatus according to any one of claims 12 to 19, wherein the processor comprises a first communication module and a second communication module, wherein the first communication module is configured to receive the first data, and the second communication module is configured to send the first data.

21. The communication apparatus according to any one of claims 12 to 20, wherein the communication apparatus is a home intelligent terminal or a Bluetooth carry-on companion.

22. A communication apparatus, wherein the communication apparatus comprises a processor and a first transceiver coupled to the processor, wherein
the processor is configured to:
send sharing indication information to a forwarding device through the first transceiver, to indicate the forwarding device to share to-be-shared first data of a terminal device; and
send the first data to the forwarding device in a unicast manner through the first transceiver.

23. The communication apparatus according to claim 22, wherein
the processor is further configured to:
receive first information from the forwarding device through the first transceiver, wherein
the first information indicates that the sharing indication information has been received; or
the first information is for requesting the first data.

24. The communication apparatus according to claim 22 or 23, wherein the sharing indication information comprises one or more of the following: a quantity of retransmissions of the first data or transmit power.

25. The communication apparatus according to any one of claims 22 to 24, further comprising a second transceiver, wherein the second transceiver shares an antenna with the first transceiver in a time division multiplexing manner.

26. A communication apparatus, wherein the communication apparatus is configured to perform the communication method according to any one of claims 1 to 11.

27. A communication apparatus, wherein the communication apparatus comprises a processor, wherein
the processor is configured to perform the communication method according to any one of claims 1 to 11.

28. A communication apparatus, comprising a processor, wherein the processor is coupled to a memory; and
the processor is configured to execute a computer program stored in the memory, so that the communication apparatus performs the communication method according to any one of claims 1 to 11.

29. A communication apparatus, comprising a processor and an interface circuit, wherein
the interface circuit is configured to receive code instructions and transmit the code instructions to the processor; and
the processor is configured to run the code instructions to perform the method according to any one of claims 1 to 11.

30. A communication apparatus, wherein the communication apparatus comprises a processor and a transceiver, the transceiver is configured to exchange information between the communication apparatus and another communication apparatus, and the processor executes program instructions to perform the communication method according to any one of claims 1 to 11.

31. A processor, wherein the processor is configured to perform the communication method according to any one of claims 1 to 11.

32. A computer-readable storage medium, wherein the computer-readable storage medium comprises a computer program or instructions; and when the computer program or the instructions are run on a computer, the computer is enabled to perform the communication method according to any one of claims 1 to 11.

33. A computer program product, wherein the computer program product comprises a computer program or instructions; and when the computer program or the instructions are run on a computer, the computer is enabled to perform the communication method according to any one of claims 1 to 11.
